# EUROPÄISCHE PATENTSCHRIFT

(11) **EP 2 906 508 B1**
(45) Veröffentlichungstag und Bekanntmachung des Hinweises auf die Patenterteilung: **11.07.2018**
(21) Anmeldenummer: 13789169.3
(22) Anmeldetag: 10.10.2013
(51) Int. Cl.: C03B 19/06, C03B 19/08, C03C 11/00

(54) **VERFAHREN ZUR HERSTELLUNG PORÖSER GLASKÖRPER**
METHOD FOR PRODUCING POROUS GLASS BODIES
PROCÉDÉ DE FABRICATION DE CORPS EN VERRE POREUX

(30) Priorität: 12.10.2012 DE 102012020107
(43) Veröffentlichungstag der Anmeldung: 19.08.2015
(73) Patentinhaber: Karlsruher Institut für Technologie (KIT), 76131 Karlsruhe (DE)
(72) Erfinder: WILLENBACHER, Norbert, 67292 Kirchheimbolanden (DE); HOCHSTEIN, Bernhard, 76646 Bruchsal (DE); KOOS, Erin, 76137 Karlsruhe (DE); DITTMANN, Jens, 76227 Karlsruhe (DE)
(74) Vertreter: Müller-Boré & Partner Patentanwälte PartG mbB
(86) Internationale Anmeldenummer: PCT/EP2013/003053
(87) Internationale Veröffentlichungsnummer: WO 2014/056616

(56) Entgegenhaltungen:
- WO-A1-2007/000310
- AKARTUNA I ET AL: "Macroporous Ceramics from Particle-stabilized Emulsions", ADVANCED MATERIALS, WILEY VCH VERLAG, DE, Bd. 20, Nr. 24, 20. Oktober 2008 (2008-10-20), Seiten 4714-4718, XP002598181, ISSN: 0935-9648, DOI: 10.1002/ADMA.200801888
- E. KOOS ET AL: "Capillary Forces in Suspension Rheology", SCIENCE, Bd. 331, Nr. 6019, 18. Februar 2011 (2011-02-18), Seiten 897-900, XP055037557, ISSN: 0036-8075, DOI: 10.1126/science.1199243 in der Anmeldung erwähnt -& E. Koos ET AL: "Supporting Online Material for Capillary Forces in Suspension Rheology", Science, 17. Februar 2011 (2011-02-17), XP055074839, Gefunden im Internet: URL:http://www.sciencemag.org/content/331/ 6019/897/suppl/DC1 [gefunden am 2013-08-12]
- BINKS B P: "MACROPOROUS SILICA FROM SOLID-STABILIZED EMULSION TEMPLATES", ADVANCED MATERIALS, WILEY VCH VERLAG, DE, Bd. 24, Nr. 14, 17. Dezember 2002 (2002-12-17), Seiten 1824-1827, XP001141107, ISSN: 0935-9648, DOI: 10.1002/ADMA.200290010

## Beschreibung

Die vorliegende Erfindung betrifft ein Verfahren zur Herstellung poröser Gläser bzw. Glaskörper.

Poröse Gläser sind für eine Vielzahl von Anwendungen geeignet. Durch ihre hohe mechanische, thermische und chemische Stabilität, die variabel einstellbaren Porengrößen mit einer engen Porengrößenverteilung und die Vielfalt an Oberflächenmodifizierungen eröffnet sich ein breites Einsatzspektrum. Auch die Möglichkeit, unterschiedliche Geometrien zu realisieren, ist ein Vorteil bei Anwendungen in der Industrie, Medizin, Pharmaforschung, Biotechnologie und Sensortechnologie. Mit ihren engen Porengrößenverteilungen stellen poröse Gläser ideale Materialien zur Stofftrennung dar. Aus diesem Grund werden sie in der Gaschromatographie, der Dünnschichtchromatographie und der Affinitätschromatographie eingesetzt. Eine Anpassung der stationären Phase an ein Trennproblem ist durch gezielte Modifizierung der Oberfläche von porösen Gläsern möglich.

Auch in der Biotechnologie bieten sie sich durch ihre vorteilhaften Eigenschaften zur Reinigung von DNA, zur Immobilisierung von Enzymen oder Mikroorganismen an. Auch zur Synthese von Oligonukleotiden sind sie hervorragend geeignet. Dabei werden bestimmte Startnukleotide auf der inneren Oberfläche von sogenannten CPGs (controlled porous glass) aufgebracht. Die Kettenlänge der entstehenden Oligonukleotide wird unter anderem durch die Porengröße der CPGs beeinflusst.

Des Weiteren werden poröse Gläser auch zur Fertigung von Implantaten, insbesondere Dentalimplantaten, verwendet. Dabei werden Pulver aus porösen Glaspartikeln mit einem Kunststoff zu einem Komposit verarbeitet, wobei die Partikel- und die Porengröße die Elastizität des Komposits positiv beeinflussen und sie weiterhin die optischen und mechanischen Eigenschaften des umliegenden Gewebes, z. B. des Zahnschmelzes, anpasst.

Da poröse Gläser auch als Membranen hergestellt werden können, ist die Membrantechnologie ein weiteres wichtiges Anwendungsgebiet. Beispielsweise werden sie als Filtermembran in der Lebensmitteltechnologie verwendet. Beim Einsatz dieser Materialien werden vergleichsweise höhere Durchsätze erzielt. Des Weiteren sind die Hyperfiltration von Meer- und Brackwasser und die Ultrafiltration im "Downstream-Prozess" hervorzuheben. Neben dem Einsatz als Trennmaterial sind poröse Gläser auch als Trägermaterial in der Katalyse geeignet. Die Olefin-Methathese wurde beispielsweise am System Metall-Metalloxid/poröses Glas realisiert.

Auch als Membranreaktoren können poröse Gläser eingesetzt werden, da sie eine hohe mechanische, aber vor allem thermische und chemische Stabilität aufweisen. Membranreaktoren können den Umsatz von gleichgewichtsbeschränkten Reaktionen verbessern, indem über eine selektive Membran ein Reaktionsprodukt abgeführt wird. Beispielsweise bei der Zersetzung von Schwefelwasserstoff an einem Katalysator in einer porösen Glaskapillare war der Umsatz der Reaktion mit Glaskapillare im Gegensatz zur Reaktion ohne Glaskapillare deutlich höher.

Poröse Gläser weisen eine hohe chemische, thermische und mechanische Stabilität auf, welche aus einem starren und inkompressiblen Silikat-Netzwerk resultiert. Die Porosität solcher Glasformkörper kann eine geschlossene oder eine offene Porosität sein, wobei die offene Porosität durch Poren gekennzeichnet ist, die untereinander und mit der Umgebung in Verbindung stehen, und die geschlossene Porosität durch nicht miteinander verbundene Poren gekennzeichnet ist. Die offene Porosität wird dabei ferner in eine durchgängige und eine nicht durchgängige offene Porosität unterteilt. Sie können in reproduzierbarer Qualität im Porengrößenbereich von 1-1000 nm hergestellt werden und decken damit die Bereiche der Mikro (< 2 nm)-, Meso (2-50 nm)- und Makroporen (> 50 nm) ab.

Ein weiterer wesentlicher Vorteil poröser Gläser gegenüber anderen porösen Materialien ist dadurch gegeben, dass poröse Gläser nicht nur als Pulver oder Granulate, sondern auch als Formkörper mit prinzipiell beliebiger Gestalt und Textur zur Verfügung stehen.

Zur Herstellung von porösen Gläsern sind derzeit aber aufwändige nasschemische Verfahrensschritte erforderlich. So werden poröse Gläser beispielsweise durch Extraktionsprozesse aus phasengetrennten Alkaliborosilikatgläsern hergestellt.

WO 2007/000310 offenbart ein Verfahren zur Herstellung poröser Strukturen oder Materialien, einschließlich der kolloidalen Verarbeitung (z. B. Schlickerguss, Druckguss, Bandguss oder elektrophoretische Abscheidung) von Feststoffteilchenemulsionen, um einen Grünkörper zu bilden, der direkt ohne einen Bindungsschritt gesintert werden kann .

Der vorliegenden Erfindung liegt insofern die Aufgabe zugrunde, ein Verfahren bereitzustellen, das die Herstellung poröser Glaskörper mit definierter Porosität, Porenart und -größe ohne aufwändige Verfahrensschritte ermöglicht.

Die vorstehend genannte Aufgabe wird erfindungsgemäß durch ein Verfahren zur Herstellung poröser Glaskörper gelöst, das die folgenden Schritte umfasst:
Dispergieren von 2 bis 40 Volumenprozent eines teilchenförmigen Glaspulvers in 50 bis 97,99 Volumenprozent einer flüssigen Primärphase und dann Zumischen von 0,01 bis 10 Volumenprozent einer flüssigen Sekundärphase zu der erhaltenen Suspension aus teilchenförmigem Glaspulver und flüssiger Primärphase, jeweils bezogen auf das Gesamtvolumen der Suspension, wobei die Primärphase und die Sekundärphase nicht miteinander mischbar sind, unter Bildung einer Kapillarsuspension,
Verarbeiten der Kapillarsuspension in einen Formkörper,
Entfernen der Primärphase und der Sekundärphase von der Suspension, und
Sintern, wodurch ein poröser Glaskörper gebildet wird,
wobei als Primärphase eine unpolare Flüssigkeit und als Sekundärphase eine polare Flüssigkeit verwendet wird und die flüssige unpolare Primärphase aus Paraffinölen, Silikonölen, Mineralölen oder einem geschmolzenen Wachs, ausgewählt aus Paraffinwachsen, Carnaubawachsen, Montanwachsen, Polyethylenwachsen, Polypropylenwachsen oder Polyamidwachsen, ausgewählt ist.

Eine Kapillarsuspension ist ein Dreiphasensystem fest - flüssig - flüssig, wobei die flüssigen Phasen nicht miteinander mischbar sind, wobei jeweils eine Flüssigkeit die Primärphase und die andere Flüssigkeit die Sekundärphase bildet und entweder die Primär- oder die Sekundärphase gegenüber dem Feststoff besser benetzend ist, so daß sich eine hochelastische, gelartige Substanz bildet, wobei das durch Kapillarkräfte zusammengehaltene Partikelnetzwerk stabil bleibt und keine Sedimentation auftritt. Bezüglich des Begriffes der "Kapillarsuspension" wird auf Science, Bd. 331, Nr. 6019, Seiten 897-900, verwiesen.

Die Figuren zeigen:
Fig. 1 ein Grundfließbild zur erfindungsgemäßen Herstellung poröser Sinterwerkstoffe mittels kapillarer Suspensionen;
Fig. 2 das im nachstehenden Ausführungsbeispiel 1 angewendete Pyrolyse- und Sinterprofil; und
Fig. 3 rasterelektronenmikroskopische Mikrostrukturaufnahmen von Probenanschliffen des im Ausführungsbeispiel 1 erhaltenen Glas-Sinterkörpers (Hell = Glas, Dunkel = Pore).

Das erfindungsgemäße Verfahren zur Herstellung poröser Glaskörper beruht auf der Nutzung sogenannter kapillarer Suspensionen, so dass ein Einbeziehen von Fremdphasen unnötig ist. Unter einer kapillaren Suspension wird dabei - wie bereits vorstehend ausgeführt - das Dreiphasensystem fest-flüssig-flüssig verstanden. Die flüssigen Phasen sind aufgrund unterschiedlicher Polarität nicht miteinander mischbar, wobei jeweils eine Flüssigkeit die Primärphase und die andere Flüssigkeit die Sekundärphase bildet. Die in Bezug auf das Volumen dominierende Flüssigkeit wird als Hauptphase bzw. Primärphase, die zweite nur in geringer Menge zugegebene Flüssigkeit wird als Sekundärphase bzw. Zweitphase bezeichnet. Als flüssige Phasen sind im Zusammenhang mit der vorliegenden Erfindung auch Materialien zu verstehen, die im schmelzflüssigen Zustand vorliegen, wie z.B. schmelzflüssige Polymere und Wachse. Bezüglich des Benetzungsverhaltens der flüssigen Phasen zum Feststoff der kapillaren Suspension werden die zwei Fälle eines Dreiphasengrenzwinkels θ > 90° (Fall 1) und θ < 90° (Fall 2) unterschieden. Hierbei ist entweder die Primär- oder die Sekundärphase gegenüber dem Feststoff besser benetzend. Wenn der in Teilchenform vorliegende Feststoff in der Primärphase homogen dispergiert ist und die Sekundärphase zugesetzt wird, bildet sich jeweils ein Teilchennetzwerk aus, das sich homogen durch die gesamte Primärphase zieht und sich in einer Änderung der rheologischen Eigenschaften äußert. Insbesondere kann sich dabei je nach Anteil der Sekundärphase und der Art der verwendeten Primärphase und des teilchenförmigen Feststoffs eine hochelastische, gelartige Substanz bilden. Die Ausbildung des Teilchennetzwerks ist (sowohl für den Fall 1 als auch für den Fall 2) darauf zurückzuführen, dass die Sekundärphase als "Verbindungsflüssigkeit" zwischen den Feststoffteilchen vorliegt. Das durch Kapillarkräfte zusammengehaltene Partikelnetzwerk bleibt dabei weitgehend stabil, es tritt keine Sedimentation auf. Die erhaltene gelartige Substanz kann zu einem Formkörper geformt werden, der nach der Entfernung der Primär- und Sekundärphase gesintert werden kann.

Wird zu der aus dem Glaspulver bzw. Glaspartikeln und der Haupt- bzw. Primärphase bestehenden Suspension (Partikelkonzentration 2 bis 40 %, typischerweise 10-30%) die Sekundärphase hinzugegeben, ändert sich das Fließverhalten drastisch von flüssig zu pastös. Die Änderung der rheologischen Eigenschaften beruht auf der Bildung eines die gesamte Primärphase durchziehenden Partikel-Netzwerks, das durch Kapillarkräfte zusammengehalten wird. Diese Partikel-Netzwerke kollabieren auch nicht, wenn die Primärphase von der Suspension abgetrennt wird.

Gemäß der vorliegenden Erfindung können die Oberflächen des eingesetzten Glaspulvers hydrophil oder hydrophob gestaltet sein. Eine hydrophile Oberfläche kann beispielsweise durch Waschen des Glaspulvers mit Aceton und nachfolgend mit NaOH-Lösung and anschließendem Spülen erreicht werden. Eine hydrophobe Oberfläche kann durch Behandlung mit beispielsweise Trimethylsilylchlorid erzeugt werden. Im Falle einer hydrophilen Glasoberfläche ist die Sekundärphase gegenüber dem Glaspulver-Feststoff besser benetzend (Fall 2; θ < 90°); im Fall einer hydrophoben Glasoberfläche ist die Primärphase gegenüber dem Glaspulver-Feststoff besser benetzend (Fall 1; θ > 90°). In beiden Fällen wird jedoch eine stabile Kapillarsuspension erhalten.

Das Dispergieren des Feststoffs (Glaspulver) in der Primärphase und die Zugabe der Sekundärphase erfolgen mittels geeigneter Knet- oder Rührvorrichtungen, beispielsweise mittels einer Kugelmühle, je nach den verwendeten Ausgangsmaterialien bei Drehzahlen im Bereich von 10 bis 2000 U/min, vorzugsweise 100 bis 2000 U/min, insbesondere 1000 bis 2000 U/min, und in einem Temperaturbereich von zwischen 10 °C und 200 °C, vorzugsweise zwischen 20 °C und 100 °C.

Üblicherweise wird das in Pulverform vorliegende Glaspulver in einem ersten Verfahrensschritt homogen in die Primärphase eingemischt. Hierzu kann in geeigneter Weise, wie vorstehend bereits ausgeführt, eine Kugelmühle verwendet werden, um eventuell vorliegende Agglomerate aufzubrechen. In einer Ausführungsform der vorliegenden Erfindung können Additive zugegeben werden, um ein Reagglomerieren der Partikel bzw. Glaspulverteilchen zu vermeiden. Solche Additive sind dem Fachmann bekannt. Beispielsweise kann hier Tween 20, Carl Roth GmbH & Co. KG, genannt werden. Anschließend wird bei üblicherweise hohen Drehzahlen mittels Dissolver die vorliegende Suspension dispergiert und die Sekundärphase hinzugegeben, sodass eine Kapillarsuspension entsteht. Die so entstandene Paste kann dann im nächsten Schritt zu Formkörpern weiterverarbeitet werden, z.B. durch Formgebungsverfahren wie Niederdruckspritzgießen oder Siebdruck.

Vorzugsweise ist das eingesetzte Glaspulver auf Basis von Kalk-Natron-Glas, Quarzglas aus reinem Siliciumdioxid, Bleiglas, Wasserglas, Borosilikatglas, Borphosphatglas, Alumosilikatglas, Fluoridglas oder Chalkogenidglas.

Üblicherweise weist das eingesetzte Glaspulver eine mittlere Teilchengröße d₅₀ von 0,1 bis 100 µm, vorzugsweise von 1 bis 50 µm, insbesondere von 3 bis 10 µm, auf. Die mittlere Teilchengröße des teilchenförmigen Glaspulvers wird mittels Laserbeugung (in Anlehnung an DIN EN 725-5, ISO 13320), Licht- und Elektronenmikroskopie bestimmt.

Gemäß der vorliegenden Erfindung wird als Primärphase eine unpolare Flüssigkeit, wobei, wie bereits vorstehend ausgeführt, hierunter im Rahmen der vorliegenden Erfindung auch Materialien verstanden werden, die im schmelzflüssigen Zustand vorliegen, wie z.B. schmelzflüssige Polymere und Wachse, und als Sekundärphase eine polare Flüssigkeit verwendet.

Gemäß der vorliegenden Erfindung ist die unpolare Flüssigkeit aus Paraffinölen, Silikonölen, Mineralölen oder einem geschmolzenen Wachs, ausgewählt aus Paraffinwachsen, Carnaubawachsen, Montanwachsen, Polyethylenwachsen, Polypropylenwachsen oder Polyamidwachsen, ausgewählt.

Die polare Flüssigkeit wird vorzugsweise aus der Gruppe, bestehend aus Wasser, wässrigen Polymerlösungen, wässrigen Polysaccharidlösungen und geschmolzenen polaren Polymeren, ausgewählt. Bevorzugt werden Wasser und entsprechende wässrige Lösungen, Polyethylenglykol (PEG), Polyvinylalkohol (PVA), Polyvinylpyrrolidon (PVP), Saccharose bzw. Glycerin eingesetzt, wobei PEG, Polyvinylpyrrolidon, Saccharose, Wasser und entsprechende wässrige Lösungen besonders bevorzugt sind. Insbesondere können wässrige Saccharoselösungen oder Polyethylenglykole (PEG) eingesetzt werden.

Insofern gemäß dem erfindungsgemäßen Verfahren zur Herstellung poröser Glaskörper zunächst eine hochelastische, gelartige, formbare Masse erhalten wird, kann aus dieser hochelastischen, gelartigen Masse in einfacher Weise ein Formkörper hergestellt werden. Geeignete Verfahren zur Herstellung eines Formkörpers aus dieser Masse sind z.B. Extrusion, Spritzguss oder Siebdruck, wobei dem Fachmann geläufige Verfahrensparameter eingesetzt werden, die auf die jeweils vorliegende gelartige Masse abgestimmt sind.

Gegebenenfalls kann zwischen dem Dispergieren und dem Entfernen vor dem eigentlichen Formgebungsschritt auch ein Auftragen der Kapillarsuspension auf einen entsprechenden Träger durchgeführt werden. So kann die Kapillarsuspension auch als Schicht auf einen ebenen oder vorgeformten Träger oder eine Gerüststruktur bzw. Precursorstruktur, wie z.B. eine Filtergerüststruktur, aufgebracht und dann auf diesem bzw. dieser entbindert und gesintert werden. Wenn der Träger poröser Natur ist, kann er selbst als Absorbermaterial entbindernd wirken.

Was den Schritt des Entfernens der Primärphase und der Sekundärphase betrifft , so wird gemäß einer bevorzugten Ausführungsform zunächst die Primärphase von der Suspension bis zu einem Ausmaß von mindestens 85 %, vorzugsweise von mindestens 90 %, bezogen auf Volumenprozent der flüssigen Primärphase, entfernt. Erfindungsgemäß gibt es drei Varianten zum Entfernen der Hauptphase aus dem Grünteil (= Probenteil nach der Formgebung). Die geeignete Vorgehensweise des Entbinderns kann von einem Fachmann anhand des verwendeten Materials der Hauptphase ausgewählt werden.
a) Flüssigkeiten: kapillare Extraktion
   Werden Öle oder sonstige bei Raumtemperatur flüssige Materialien als Hauptphase verwendet, welche nicht oder nur schwer verdampft werden können, kann die kapillare Extraktion Anwendung finden. Hierbei wird das Grünteil auf eine saugfähige Unterlage gebettet, wobei durch die Kapillarkraft der Unterlage die Hauptphase dem Probenteil entzogen wird. Als saugfähige Unterlage kann beispielhaft Cellulose oder direkt die poröse Sinterunterlage genannt werden.
b) Flüssigkeiten: Trocknung
   Werden Öle oder sonstige bei Raumtemperatur flüssige Materialien als Hauptphase verwendet, welche leicht verdampft werden können, kann die Trocknung Anwendung finden. Dies erfolgt bei Raumtemperatur oder leicht erhöhter Temperatur und entsprechend der Temperatur angepasstem Systemdruck. Üblicherweise wird das Erwärmen/Trocknen je nach der verwendeten Primär/Sekundärphase in einem Temperaturbereich zwischen 100 °C bis 800 °C für einen Zeitraum von 1 Stunde bis 24 Stunden bei Normaldruck und ohne spezielle Schutzatmosphäre durchgeführt. Die Abstimmung der Verfahrensparameter im Rahmen dieses Trocknungsschritts auf das jeweils vorliegende Materialsystem liegt im handwerklichen Ermessen eines Fachmanns.
c) Wachse: kapillare Extraktion oder Lösemittelextraktion
   Werden Wachse oder sonstige bei Raumtemperatur erstarrt vorliegende Materialien als Hauptphase verwendet, so können diese mittels kapillarer Extraktion (vgl. vorstehenden Punkt a)) bei Temperaturen über dem Schmelzpunkt der Hauptphase oder mittels Lösemittelextraktion bei Temperaturen unterhalb des Schmelzpunktes der Hauptphase aus dem Grünteil entfernt werden.

Eventuell im Probenteil verbliebene Anteile an Hauptphase werden bei der anschließenden thermischen Zersetzung der Zweitphase mitentfernt.

Das Sintern des erhaltenen Festkörpers wird je nach der Art des teilchenförmigen Glaskörpers durchgeführt. Die Abstimmung der Sinterparameter auf das jeweils vorliegende Glasmaterialsystem liegt im handwerklichen Ermessen eines Fachmanns.

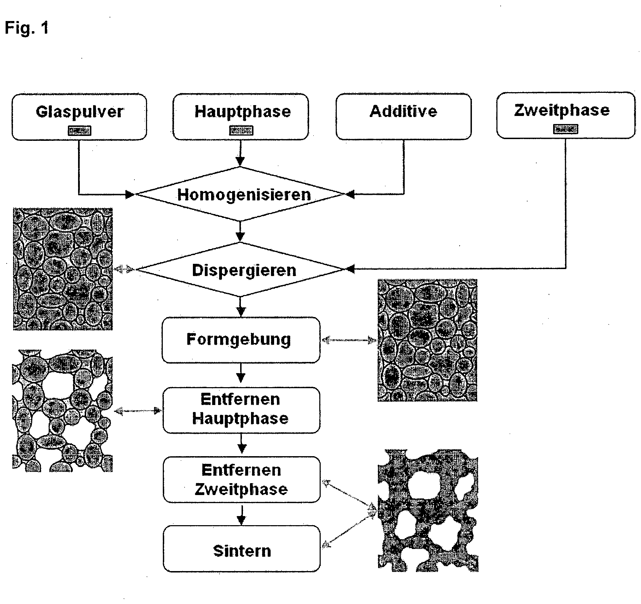

Ein schematisches Grundfließbild des erfindungsgemäßen Verfahrens zur Herstellung hochporöser Glassinterkörper auf Basis kapillarer Suspensionen ist in Figur 1 dargestellt. Zunächst wird das einzusetzende Glasmaterial in Pulverform bereitgestellt. Das in Pulverform vorliegende Glaspulver wird dann in einem ersten Verfahrensschritt homogen in die Hauptphase bzw. Primärphase eingemischt. Hierzu können geeignete Knet- oder Rührvorrichtungen, vorzugsweise eine Kugelmühle, verwendet werden, um eventuell vorliegende Agglomerate aufzubrechen. Gegebenenfalls können Additive zugegeben werden, um ein Reagglomerieren der Partikel zu verhindern. Anschließend wird bei hohen Drehzahlen mittels z.B. Dissolver die vorliegende Suspension dispergiert und die Zweitphase hinzugegeben, sodass eine Kapillarsuspension entsteht. Falls die Kapillarsuspension Inhomogenitäten aufweist, kann diese erneut mittels z.B. Kugelmühle homogenisiert werden. Die derart erhaltene Paste wird im nächsten Schritt zu Formkörpern weiterverarbeitet. Geeignete Formgebungsverfahren können hier insbesondere das Niederdruckspritzgießen oder der Siebdruck sein.

Die so hergestellten Formkörper werden anschließend vorzugsweise selektiv entbindert (Erzeugung des sogenannten Braunkörpers), d.h. in einer bevorzugten Ausführungsform wird erst die Primärphase (Hauptphase) und im Anschluss die Sekundärphase (Zweitphase) entfernt. Überraschenderweise ermöglicht dieses Vorgehen in vorteilhafter Weise ein schonendes Entfernen der Primär- und Sekundärphase, ohne die eingestellte Partikel-Netzwerkstruktur zu zerstören bzw. zu beeinträchtigen. Zum Entfernen der Hauptphase findet Lösemittelextraktion, Trocknen bzw. kapillares Entbindern mittels Absorbermaterialien Anwendung. Das Entfernen der Sekundärphase und eventueller Reste der Primärphase erfolgt vorzugsweise in einem Entbinderungsofen. Bei Verwendung schonender Heizraten entweicht die Zweitphase durch Diffusion. Auch hier werden die Parameter gemäß fachmännischem Handeln so gewählt, dass die eingestellte Struktur nicht gestört wird. Im letzten Schritt wird das Partikelgerüst mit einem auf den Feststoff bzw. Braunkörper angepassten Sinterprofil versintert, sodass ein stabiler, poröser Glas-Formkörper mit entsprechender Festigkeit entsteht.

Das erfindungsgemäße Verfahren stellt einen porösen Glaskörper bereit. Gemäß einer bevorzugten Ausführungsform weist der poröse Glaskörper eine Porosität von 30 bis 80 %, vorzugsweise von 30 bis 60 %, mehr bevorzugt größer als 50 %, und eine mittlere Porengröße dso von 0,1 bis 100 µm, insbesondere von 0,5 bis 50 µm bzw. von 0,5 bis 10 µm bzw. von 1 bis 5 µm auf. Die Porosität und die mittlere Porengröße werden mittels Quecksilberporosimetrie (in Anlehnung an DIN66133), Archimedesdichte (in Anlehnung an DIN EN 993-18) und quantitativer Gefügeanalyse (in Anlehnung an DIN EN ISO 643) bestimmt. Die Porosität der erfindungsgemäßen porösen Glaskörper ist dabei eine offene und durchgängige Porosität. Die Kombination aus kleinen Poren und hoher offener Porosität wird durch das erfindungsgemäße Verfahren in äußerst einfacher Weise erzielt. Zwar sind poröse Glaskörper per se bekannt, jedoch zeichnen sich die erfindungsgemäß erhältlichen porösen Glaskörper durch das entsprechende Verhältnis von Porengröße zu Partikelgröße aus, welches in der Regel im Bereich von größer als 3:1 liegt.

Der durch das erfindungsgemäße Verfahren erhältliche poröse Glaskörper kann ferner einer gezielten Modifizierung bzw. Funktionalisierung der Oberfläche unterworfen werden. Derartige Modifizierungs- bzw. Funktionalisierungsverfahren sind dem Fachmann bekannt.

Aufgrund der Vielfalt der verwendbaren Glasausgangsmaterialien als teilchenförmiger Feststoff in Kombination mit den erzielbaren Eigenschaften hinsichtlich der Porosität und der Porengröße ist das erfindungsgemäße Verfahren universell einsetzbar und somit für die unterschiedlichsten industriellen Anwendungsbereiche interessant. Kleinere Porengrößen ermöglichen bei Filtersystemen beispielsweise eine gewünschte höherwertige Aufreinigung von Medien, wobei in der Kombination mit der offenen Porosität aufgrund der vergleichsweise höheren Durchsätze eine verbesserte Rentabilität erzielt werden kann.

Schließlich kann bei geeigneter Auswahl der in einer vergleichsweise großen Menge eingesetzten Primärphase durch entsprechende Recyclingverfahren eine weitgehend vollständige Rückgewinnung der Primärphase erreicht werden (z.B. durch Lösemittelextraktion der Primärphase und Rückgewinnung von Lösemittel und Primärphase in einem geschlossenen Kreislauf). Ferner kann die thermische Pyrolyse der Sekundärphase bei Normaldruck und ohne spezielle Schutzatmosphäre durchgeführt werden, wobei aufgrund des niedrigen Sekundärphasenanteils im Vergleich zu anderen Verfahren nur eine geringe Menge an toxischen Pyrolysegasen anfällt.

Die vorliegende Erfindung wird durch die nachfolgenden Ausführungsbeispiele näher erläutert.

### Ausführungsbeispiel 1:

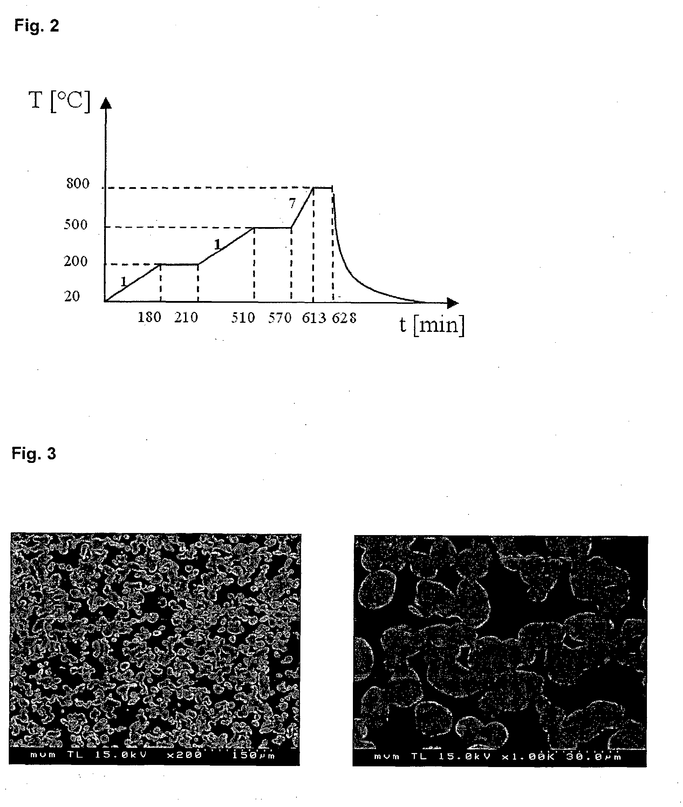

Der Feedstock, bestehend aus 20 vol% Gesamtfeststoffanteil Glaspulver, mit einer Partikelgröße von x_{50,Partikel}= 15 µm, 77,5 vol% Paraffinöl als Hauptphase und 2,5 vol% Saccharoselösung (1,853 M) als Zweitphase wurde bei Raumtemperatur mittels Rühren mittels Dissolverrührer bei 1200 s⁻¹ und Kneten mittels Kugelmühle für 24 h, zu einer kapillaren Suspension verarbeitet. Entsprechende Probenkörper wurden mittels Siebdruck hergestellt. Aus dem so erhaltenen Grünkörper wurde im Anschluss mittels kapillarer Extraktion unter Verwendung einer saugfähigen Unterlage die Hauptphase weitestgehend entfernt. Der Braunkörper wurde daraufhin dem Temperaturprofil gemäß Figur 2 unterzogen, wodurch die Zweitphase thermisch zersetzt wird und ein Sinterkörper entsteht. Die resultierende Gesamtporosität beträgt 50% bei einer Biegefestigkeit σ_{f} von 19,7±2,2 MPa und einer Druckfestigkeit σ_{c} von 52,2±13,5 MPa. Die resultierende Mikrostruktur im gesinterten Teil ist in Figur 3 dargestellt, die mittlere Porengröße liegt bei x_{50,Pore}= 49,6±4,2 µm.

### Ausführungsbispiel 2:

Der Feedstock, bestehend aus 20 vol% Gesamtfeststoffanteil Glaspulver, mit einer Partikelgröße von x_{50,Partikel}= 15 µm, 77,5 vol% Paraffinwachs (H&R 50/52, H&R) als Hauptphase und 2,5 vol% Polyethylenglycol (PEG 1500, BASF) als Zweitphase wurde bei 75°C mittels Rühren per Dissolverrührer bei 1200s⁻¹ zu einer kapillaren Suspension verarbeitet. Entsprechende Probenkörper wurden mittels Extrusion hergestellt und abgekühlt. Aus dem so erhaltenen erstarrten Grünkörper wurde im Anschluss zuerst mittels Lösemittelextraktion durch die Verwendung von n-Hexan bei 40°C weitestgehend die Hauptphase entfernt. Der Probenkörper wurde daraufhin im nächsten Schritt dem Temperaturprofil nach Figur 2 unterzogen, wodurch die Zweitphase thermisch zersetzt wird und ein Sinterkörper entsteht. Die resultierende Gesamtporosität beträgt 52% bei einer mittleren Porengröße von x_{50,Pore}= 50 ± 5 µm.

## Patentansprüche

1. Verfahren zur Herstellung poröser Glaskörper, umfassend die Schritte:
Dispergieren von 2 bis 40 Volumenprozent eines teilchenförmigen Glaspulvers in 50 bis 97,99 Volumenprozent einer flüssigen Primärphase und dann Zumischen von 0,01 bis 10 Volumenprozent einer flüssigen Sekundärphase zu der erhaltenen Suspension aus teilchenförmigem Glaspulver und flüssiger Primärphase, jeweils bezogen auf das Gesamtvolumen der Suspension, wobei die Primärphase und die Sekundärphase nicht miteinander mischbar sind, unter Bildung einer Kapillarsuspension,
Verarbeiten der Kapillarsuspension in einen Formkörper,
Entfernen der Primärphase und der Sekundärphase von der Suspension, und
Sintern, wodurch ein poröser Glaskörper gebildet wird,
wobei als Primärphase eine unpolare Flüssigkeit und als Sekundärphase eine polare Flüssigkeit verwendet wird und die flüssige unpolare Primärphase aus Paraffinölen, Silikonölen, Mineralölen oder einem geschmolzenen Wachs, ausgewählt aus Paraffinwachsen, Carnaubawachsen, Montanwachsen, Polyethylenwachsen, Polypropylenwachsen oder Polyamidwachsen, ausgewählt ist.

2. Verfahren nach Anspruch 1, wobei das eingesetzte Glaspulver auf Basis von Kalk-Natron-Glas, Quarzglas aus reinem Siliciumdioxid, Bleiglas, Wasserglas, Borosilikatglas, Borphosphatglas, Alumosilikatglas, Fluoridglas oder Chalkogenidglas ist.

3. Verfahren nach Anspruch 1 oder 2, wobei das Glaspulver eine mittlere Teilchengröße d₅₀ von 0,1 bis 100 µm aufweist.

4. Verfahren nach einem der Ansprüche 1 bis 3, wobei die Glaspulveroberflächen hydrophil sind.

5. Verfahren nach einem der Ansprüche 1 bis 3, wobei die Glaspulveroberflächen hydrophob sind.

6. Verfahren nach einem der Ansprüche 1 bis 5, wobei die flüssige polare Sekundärphase aus der Gruppe, bestehend aus Wasser, wässrigen Polymerlösungen, wässrigen Polysaccharidlösungen und geschmolzenen polaren Polymeren, ausgewählt ist.

7. Verfahren nach einem der Ansprüche 1 bis 6, wobei im Schritt des Entfernens zunächst die Primärphase von der Suspension bis zu einem Ausmaß von mindestens 85 %, vorzugsweise von mindestens 90 %, besonders bevorzugt von mindestens 95 %, bezogen auf Volumenprozent der flüssigen Primärphase, entfernt wird, wobei das Entfernen, in Abhängigkeit von dem gewählten Primärphasenmaterial, (i) durch kapillare Extraktion, (ii) Lösemittelextraktion oder (iii) Trocknung erfolgt, und anschließend das Entfernen der Sekundärphase erfolgt.

8. Verfahren nach einem der Ansprüche 1 bis 7, wobei zwischen dem Dispergieren und dem Entfernen vor dem eigentlichen Formgebungsschritt ein Auftragen der Kapillarsuspension auf einen entsprechenden Träger durchgeführt wird.

## Claims

1. A method for producing porous glass bodies, comprising the steps of:
dispersing 2 to 40% by volume of a particulate glass powder in 50 to 97.99% by volume of a liquid primary phase and then admixing 0.01 to 10% by volume of a liquid secondary phase to the resulting suspension of particulate glass powder and liquid primary phase, based in each case on the total volume of the suspension, wherein the primary phase and the secondary phase are not miscible with each other, thus forming a capillary suspension,
processing the capillary suspension into a shaped body,
removing the primary phase and the secondary phase from the suspension, and
sintering, whereby a porous glass body is formed,
wherein a non-polar liquid is used as the primary phase and a polar liquid is used as the secondary phase, and the liquid non-polar primary phase is selected from paraffin oils, silicone oils, mineral oils or a molten wax, selected from paraffin waxes, carnauba waxes, montan waxes, polyethylene waxes, polypropylene waxes or polyamide waxes.

2. The method according to claim 1, wherein the glass powder used is on the basis of soda-lime glass, quartz glass of pure silicon dioxide, lead glass, water glass, borosilicate glass, boron phosphate glass, aluminosilicate glass, fluoride glass or chalcogenide glass.

3. The method according to claim 1 or 2, wherein the glass powder has an average particle size d₅₀ of 0.1 to 100 µm.

4. The method according to one of claims 1 to 3, wherein the glass powder surfaces are hydrophilic.

5. The method according to one of claims 1 to 3, wherein the glass powder surfaces are hydrophobic.

6. The method according to one of claims 1 to 5, wherein the liquid polar secondary phase is selected from the group consisting of water, aqueous polymer solutions, aqueous polysaccharide solutions, and molten polar polymers.

7. The method according to one of claims 1 to 6, wherein in the step of removing, first the primary phase is removed from the suspension to an extent of at least 85%, preferably at least 90%, more preferably at least 95%, based on volume percent of the liquid primary phase, wherein removing takes place (i) by capillary extraction, (ii) solvent extraction or (iii) drying, depending on the selected primary phase material, followed by removal of the secondary phase.

8. The method according to one of claims 1 to 7, wherein between dispersing and removal, before the actual shaping step, application of the capillary suspension to a corresponding carrier is carried out.

## Revendications

1. Procédé de fabrication de corps en verre poreux, comprenant les étapes de :
dispersion de 2 à 40 pourcent en volume d'une poudre de verre particulaire dans 50 à 97,99 pourcent en volume d'une phase primaire liquide, puis mélange de 0,01 à 10 pourcent en volume d'une phase secondaire liquide à la suspension obtenue de poudre de verre particulaire et phase primaire liquide, à chaque fois par rapport au volume total de la suspension, dans lequel la phase primaire et la phase secondaire ne peuvent pas être mélangées l'une avec l'autre, en formant une suspension capillaire,
transformation de la suspension capillaire en un corps de moule,
élimination de la phase primaire et de la phase secondaire de la suspension, et
frittage, moyennant quoi un corps en verre poreux est formé,
dans lequel un liquide non polaire est utilisé comme phase primaire et un liquide polaire est utilisé comme phase secondaire, et la phase primaire non polaire liquide est sélectionnée parmi des huiles de paraffine, huiles de silicone, huiles minérales ou une cire fondue, sélectionnée parmi des cires de paraffine, cires de carnauba, cires de lignite, cires de polyéthylène, cires de polypropylène ou cires de polyamide.

2. Procédé selon la revendication 1, dans lequel la poudre de verre utilisée est à base de verre sodé calcique, verre de quartz en dioxyde de silicium pur, verre de plomb, verre soluble, verre de borosilicate, verre de borophosphate, verre d'aluminosilicate, verre de fluorure ou verre de chalcogénure.

3. Procédé selon la revendication 1 ou 2, dans lequel la poudre de verre présente une taille particulaire moyenne d₅₀ de 0,1 à 100 µm.

4. Procédé selon une des revendications 1 à 3, dans lequel les surfaces de poudre de verre sont hydrophiles.

5. Procédé selon une des revendications 1 à 3, dans lequel les surfaces de poudre de verre sont hydrophobes.

6. Procédé selon une des revendications 1 à 5, dans lequel la phase secondaire polaire liquide est sélectionnée parmi le groupe constitué d'eau, de solutions polymères aqueuses, de solutions de polysaccharide aqueuses et de polymères polaires fondus.

7. Procédé selon une des revendications 1 à 6, dans lequel la phase primaire est d'abord éliminée de la suspension à l'étape de l'élimination jusqu'à un niveau d'au moins 85 %, de préférence d'au moins 90 %, de manière particulièrement préférée d'au moins 95 %, par rapport au pourcent en volume de la phase primaire liquide, dans lequel l'élimination s'effectue en fonction du matériau de phase primaire choisi (i) par extraction capillaire, (ii) extraction par solvant ou (iii) séchage, et l'élimination de la phase secondaire s'effectue ensuite.

8. Procédé selon une des revendications 1 à 7, dans lequel une application de la suspension capillaire est effectuée sur un support correspondant entre la dispersion et l'élimination avant l'étape de façonnage proprement dite.
